# FASCICULE DE BREVET EUROPEEN

(11) **EP 2 394 194 B1**
(45) Date de publication et mention de la délivrance du brevet: **03.08.2016**
(21) Numéro de dépôt: 10708273.7
(22) Date de dépôt: 03.02.2010
(51) Int. Cl.: G02B 21/00, G01B 11/25

(54) **PROCEDE ET DISPOSITIF D'ACQUISITION DE SIGNAUX EN MICROSCOPIE LASER A BALAYAGE**
VERFAHREN UND VORRICHTUNG ZUR SIGNALERFASSUNG IN DER LASERSCAN-MIKROSKOPIE
METHOD AND DEVICE FOR ACQUIRING SIGNALS IN LASER SCANNING MICROSCOPY

(30) Priorité: 04.02.2009 FR 0950693
(43) Date de publication de la demande: 14.12.2011
(73) Titulaire: Ecole Polytechnique, 91128 Palaiseau Cedex (FR)
(72) Inventeur: BEAUREPAIRE, Emmanuel, Jean-Marc, F-91120 Palaiseau (FR); VEILLEUX, Israël, G7A 2N3 Quebec (CA); OLIVIER, Nicolas, F-75004 Paris (FR); DEBARRE, Delphine, Malvina, Danièle, Marie, F-75014 Paris (FR); MARTIN, Jean Louis, F-91440 Bures Sur Yvette (FR)
(74) Mandataire: Nony
(86) Numéro de dépôt international: PCT/FR2010/050173
(87) Numéro de publication internationale: WO 2010/089504

(56) Documents cités:
- WO-A2-2004/079405
- US-A- 6 028 306
- US-A1- 2002 147 568
- US-A1- 2004 095 576
- US-A1- 2006 012 871
- MARSH P N ET AL: "Practical implementation of adaptive optics in multiphoton microscopy" OPTICS EXPRESS MAY 2003 OPTICAL SOCIETY OF AMERICA US, vol. 11, no. 10, mai 2003 (2003-05), pages 1123-1130, XP002538472
- KING K F ET AL: 'OPTIMIZED GRADIENT WAVEFORMS FOR SPIRAL SCANNING' MAGNETIC RESONANCE IN MEDICINE vol. 34, no. 2, 01 Août 1995, JOHN WILEY & SONS, INC, US, pages 156 - 160, XP000520103 ISSN: 0740-3194

## Description

### Domaine technique

La présente invention concerne un procédé et un dispositif d'acquisition de signaux en microscopie optique à balayage permettant une optimisation de l'acquisition en fonction de l'objet à mesurer.

Le domaine de l'invention est plus particulièrement mais de manière non limitative celui de la microscopie confocale, la microscopie de fluorescence et de la microscopie non linéaire ou multiphoton.

### Etat de la technique antérieure

Le terme de microscopie optique à balayage, ou microscopie laser à balayage, regroupe un ensemble de techniques d'imagerie qui ont en commun de reposer sur un balayage du volume d'un objet par un faisceau de lumière focalisé pour obtenir de l'information sur sa structure. Ces techniques comprennent notamment la microscopie confocale, la microscopie de fluorescence, et la microscopie non linéaire ou multiphoton.

Les techniques de microscopie laser à balayage sont particulièrement bien adaptées à l'imagerie des milieux diffusants, notamment biologiques, car elles permettent de détecter d'une manière très sélective les interactions entre les photons d'excitation et le milieu qui ont lieu dans la zone de focalisation du faisceau d'excitation, tout en étant très peu sensibles aux photons diffusés ailleurs dans le volume.

L'acquisition des signaux comprend donc essentiellement un balayage du volume de l'objet à mesurer par le point de focalisation du faisceau d'excitation et une collecte de lumière diffusée ou émise par fluorescence à ce point de focalisation. Le mode de balayage utilisé le plus souvent dans les dispositifs de l'art antérieur consiste en une acquisition de mesures suivant un plan ou une séquence de plans, usuellement selon un parcours ligne par ligne dit « en trame » ou « raster scan ». Le balayage latéral du faisceau de mesure est réalisé le plus souvent par des éléments rapides tels que des scanners à miroir.

On connaît par exemple le document US 5,034,613 de Denk et al. dans lequel le faisceau d'excitation est défléchi par deux scanners à miroirs pour balayer une grille de points dans un plan perpendiculaire à l'axe du système, tandis que la profondeur de ce plan est ajusté par des moyens de focalisation.

Dans certaines applications, en biologie notamment, il est particulièrement important de minimiser le temps d'acquisition du volume de données, afin par exemple que les mesures ne soient pas perturbées par des déplacements ou puissent suivre des phénomènes évolutifs. Dans ce cas, il est souvent fait appel à des éléments acousto-optiques qui permettent d'atteindre des cadences de balayage plus élevées.

On connaît par exemple le document US 7,227,127 de Saggau et al. qui décrit un dispositif de balayage tridimensionnel basé sur des éléments acousto-optiques, qui permet d'acquérir rapidement des points à des positions quelconques dans un volume. Les applications de ce dispositif concernent plus particulièrement les neurosciences, avec notamment le suivi simultané de l'évolution temporelle de sites de mesure particuliers en microscopie non-linéaire.

L'imagerie des milieux diffusants ou complexes est confrontée à une autre difficulté qui est la forte variabilité des conditions de mesures dans l'échantillon. On distingue en particulier :
- Les pertes optiques dues à l'absorption et à la diffusion des photons dans l'échantillon, qui augmentent de manière exponentielle avec la profondeur de mesure. Ces pertes, variables, peuvent augmenter considérablement les besoins en dynamique de la détection ;
- Les dégradations spatiales du faisceau d'excitation, qui comprennent notamment une variation des aberrations avec la profondeur de mesure dans l'échantillon, liée à la différence d'indice de réfraction entre ce dernier et le milieu d'immersion de l'objectif de focalisation. Ces dégradations spatiales peuvent élargir sensiblement la taille de la zone de focalisation du faisceau, et avoir ainsi un impact non négligeable sur la résolution des mesures et l'efficacité des processus en microscopie non linéaire ;
- Les propriétés optiques ou spectroscopiques locales du milieu à l'origine du signal détecté, qui peuvent varier selon la zone ou la profondeur imagée.

L'imagerie de tels milieux peut être sensiblement améliorée en introduisant des dispositifs de compensation qui corrigent la géométrie du faisceau d'excitation et adaptent les paramètres d'acquisition en fonction de la position de la mesure et de la structure de l'échantillon. On connaît le document US 6,740,868 de Knebel et al. qui décrit un procédé de régulation de la puissance de la source laser au cours de l'acquisition, au moyen d'un élément acousto-optique inséré dans le trajet du faisceau d'excitation. L'atténuation de l'élément acousto-optique peut être préprogrammée en fonction de la profondeur du plan dans lequel est effectuée la mesure, de sorte à compenser par exemple des pertes dans l'échantillon qui auraient été estimées au préalable.

Dans le cadre de l'imagerie d'objets de forme quelconque, notamment des objets sphériques en biologie, il serait très utile de pouvoir mettre en oeuvre une correction ou une adaptation du faisceau d'excitation, en fonction non pas uniquement de la profondeur Z comme dans US 6,740,868, mais également de la position du point de mesure dans le plan X-Y. Cependant, une telle correction implémentée sur un dispositif qui effectuerait un échantillonnage des points de mesure selon un motif régulier fixe pourrait conduite à des temps d'acquisition excessivement longs, du fait de la relative lenteur de réaction des éléments utilisables par exemple pour la mise en forme spatiale du faisceau (dispositifs à cristaux liquides, miroirs déformables, dispositifs à micro-miroirs, lentilles liquides, lentilles à focale variable ...), et surtout du fait que les compensations peuvent varier fortement d'un point de mesure à l'autre en fonction de la topographie de l'échantillon.

WO2004079405 décrit un procédé de déplacement de faisceaux de mesure ou d'illumination selon de trajectoires en spirales. L'objectif est de minimiser les contraintes dynamiques sur le système de balayage tout en optimisant le temps de balayage ou d'acquisition. Les optimisations de trajectoires décrites dans WO2004079405 sont effectuées uniquement selon des critères liés aux contraintes sur le système de balayage : échantillonnage de la zone à imaginer, accélération de déplacement... Les propriétés optiques des milieux traversés par le faisceau d'excitation et qui affectent la propagation de ce faisceau ne sont pas pris au compte dans WO2004079405.

Le but de la présente invention est donc de proposer un procédé et un dispositif d'acquisition de signaux en microscopie laser à balayage, permettant une optimisation de l'acquisition en fonction de l'objet à mesurer.

### Exposé de l'invention

Cet objectif est atteint avec un procédé d'acquisition de signaux en microscopie laser à balayage, comprenant des étapes de :
- déplacement relatif d'un faisceau optique d'excitation focalisé et d'un objet à mesurer, de telle sorte que le point de focalisation dudit faisceau parcoure au moins une trajectoire déterminée au préalable dans le volume dudit objet, et
- acquisition de signaux de mesure optique le long de ladite trajectoire, selon au moins un paramètre d'acquisition,
caractérisé en ce que
- la trajectoire du faisceau d'excitation est déterminée de façon à sensiblement minimiser les variations de propriétés optiques d'au moins une partie des milieux traversés par ledit faisceau d'excitation entre des acquisitions successives, et
- en ce qu'au moins un paramètre d'acquisition parmi le(s)dit(s) paramètre(s) d'acquisition est modulé durant le déplacement dudit faisceau d'excitation.

Cette minimisation des variations de propriétés optiques des milieux traversés peut comprendre une minimisation des variations de propriétés spectroscopiques desdits milieux, c'est-à-dire des propriétés affectant le spectre de la lumière.

Suivant une caractéristique particulièrement avantageuse du procédé selon l'invention, la trajectoire du faisceau d'excitation est déterminée de telle sorte que les paramètres physiques liés au système optique et à l'objet à mesurer, susceptibles de perturber l'acquisition, varient sensiblement plus lentement au cours du balayage que dans le cas d'un balayage classique non adapté à l'objet.

Cela permet de mettre en oeuvre plus efficacement des moyens d'adaptation des paramètres d'acquisition en cours de mesure, même ayant des temps de réponse assez lents, tout en minimisant le temps d'acquisition global. De plus la précision de la correction peut être sensiblement améliorée grâce à une meilleure progressivité.

Selon une autre caractéristique avantageuse du procédé selon l'invention, la trajectoire du faisceau d'excitation et l'acquisition des signaux et des données peuvent être limités au volume de l'échantillon, de telle sorte à éviter l'acquisition de données inutiles et surtout coûteuses en temps.

Suivant des modes de réalisation particuliers,
- Le faisceau d'excitation peut parcourir au moins une trajectoire située dans un plan moyen sensiblement perpendiculaire à l'axe du système de mesure, et ladite trajectoire peut être déterminée de telle sorte à se conformer sensiblement aux courbes de niveau de la surface de l'objet à mesurer telles que projetées dans ledit plan moyen. Ainsi il est possible de réduire sensiblement ou même de minimiser les variations de profondeur du point de focalisation du faisceau dans l'objet entre des acquisitions successives, dans le but notamment d'adapter en cours de mesure des paramètres d'acquisition qui en dépendraient ;
- la trajectoire du faisceau d'excitation peut être déterminée de telle sorte à se conformer sensiblement aux symétries du système optique de conditionnement dudit faisceau d'excitation. Ainsi il est possible de réduire sensiblement ou même de minimiser les variations d'aberrations optiques subies par le faisceau entre des acquisitions successives, dans le but notamment d'adapter en cours de mesure des paramètres d'acquisition qui en dépendraient ;
- la trajectoire du faisceau d'excitation peut être déterminée de telle sorte à se conformer sensiblement à la distribution des propriétés optiques et notamment spectroscopiques des milieux traversés à l'origine du signal de mesure. Ainsi il est possible par exemple de minimiser les variations d'un signal de fluorescence entre des acquisitions successives, dans le but notamment d'adapter en cours de mesure des paramètres d'acquisition qui en dépendraient ;
- la détermination de la trajectoire du faisceau d'excitation peut comprendre l'utilisation de connaissances à priori sur la forme de l'objet à mesurer ;
- la détermination de la trajectoire du faisceau d'excitation peut comprendre l'utilisation de données préliminaires acquises pour déterminer la forme de l'objet à mesurer ;
- la détermination de la trajectoire du faisceau d'excitation peut comprendre l'utilisation de données préliminaires acquises pour déterminer la distribution des propriétés optiques et notamment spectroscopiques de l'objet à mesurer ;
- la trajectoire du faisceau d'excitation peut être sensiblement en forme de spirale ;
- les paramètres d'acquisition modulés peuvent comprendre au moins un paramètre parmi : la puissance d'excitation, la mise en forme spatiale du faisceau d'excitation, la mise en forme spectrale du faisceau d'excitation, la mise en forme temporelle du faisceau d'excitation, la polarisation du faisceau d'excitation, la vitesse de déplacement du faisceau d'excitation, et le temps d'acquisition des mesures ;
- au moins un paramètre d'acquisition parmi la puissance d'excitation, la vitesse de déplacement du faisceau d'excitation, la mise en forme temporelle du faisceau d'excitation et le temps d'acquisition des mesures peut être modulé de telle sorte à compenser sensiblement les pertes optiques dans l'objet à mesurer ;
- la mise en forme spatiale du faisceau d'excitation peut être modulée de telle sorte à compenser sensiblement les aberrations subies par le faisceau d'excitation ;
- au moins un paramètre d'acquisition parmi la mise en forme spatiale, la mise en forme spectrale et la mise en forme temporelle peut être modulé de telle sorte à compenser sensiblement les variations locales des propriétés optiques et notamment spectroscopiques des milieux traversés.

Suivant un autre aspect de l'invention, il est proposé un dispositif d'acquisition de signaux en microscopie laser à balayage, comprenant :
- des moyens pour produire un faisceau optique d'excitation,
- des moyens pour focaliser ledit faisceau à l'intérieur d'un objet,
- des moyens pour déplacer ledit faisceau focalisé selon au moins une trajectoire prédéterminée, et
- des moyens d'acquisition de signaux de mesure optiques le long de ladite trajectoire, selon au moins un paramètre d'acquisition,
caractérisé en ce qu'il comprend en outre :
- des moyens pour moduler au moins un paramètre parmi le(s)dit(s) paramètre(s) d'acquisition durant le déplacement dudit faisceau d'excitation,
- la trajectoire dudit faisceau d'excitation étant déterminée de telle sorte que les variations de propriétés optiques d'au moins une partie des milieux traversés par ledit faisceau d'excitation entre des acquisitions successives soient sensiblement minimisées.

Suivant des aspects particuliers,
- les moyens de déplacement du faisceau peuvent comprendre des moyens de déflexion du faisceau d'excitation selon au moins une direction ;
- lesdits moyens de déflexion du faisceau d'excitation peuvent comprendre au moins un élément parmi un scanner à miroir et un élément acousto-optique ;
- le dispositif selon l'invention peut en outre comprendre des moyens de déplacement de l'objet à mesurer selon au moins une direction ;
- le dispositif selon l'invention peut en outre comprendre des moyens de mesure d'au moins un paramètre parmi la position et la vitesse instantanée du faisceau d'excitation relativement à l'objet à mesurer;
- le dispositif selon l'invention peut en outre comprendre des moyens de mise en forme du faisceau d'excitation ;
- les moyens de mise en forme du faisceau d'excitation peuvent comprendre au moins un élément parmi un dispositif à cristaux liquides, un miroir déformable, un modulateur spatial de lumière, un dispositif à micro-miroirs, une lentille liquide, une lentille à focale variable.

Suivant un mode de mise en oeuvre préférentiel mais non limitatif, le procédé selon l'invention peut avantageusement être intégré dans des microscopes laser à balayage tels que par exemple :
- des microscopes confocaux, exploitant on non la fluorescence, dans lesquels une résolution spatiale élevée est obtenue grâce à la conjugaison de filtres spatiaux insérés dans le système optique, et
- des microscopes non linéaires ou multiphotoniques dont le principe de mesure repose sur des phénomènes d'émission ou de diffusion provoqués par l'interaction simultanée de plusieurs photons avec une structure de l'échantillon.

En microscopie laser à balayage, et en particulier pour la mesure d'objets volumineux diffusants tels que des échantillons biologiques, les conditions de mesure peuvent être sensiblement affectées par la profondeur dans l'échantillon à laquelle une mesure est effectuée, et ceci notamment du fait de :
- l'absorption ou la diffusion incohérente par l'échantillon, qui peuvent provoquer une décroissance exponentielle, en fonction de la profondeur, de l'intensité du faisceau d'excitation au point de focalisation. Les conséquences peuvent être des problèmes de dynamique de détection et aussi un manque d'intensité délivrée dans le cas de la microscopie non-linéaire ;
- les hétérogénéités d'indice de réfraction au sein de l'échantillon ou entre l'échantillon et le milieu d'immersion, qui peuvent induire des aberrations dans le front d'onde du faisceau focalisé et ainsi provoquer un élargissement de la zone de focalisation. Les conséquences peuvent être une perte de résolution spatiale dans les mesures et aussi un manque d'intensité délivrée dans le cas de la microscopie non-linéaire.

Les conditions de mesure peuvent également être sensiblement affectées par d'autres effets, tels que par exemple la variation des aberrations du système optique lui-même en fonction de la position du faisceau d'excitation au cours du balayage.

Avantageusement, il est possible dans un dispositif mettant en oeuvre le procédé selon l'invention d'améliorer significativement la qualité des mesures en modulant ou en faisant évoluer des paramètres d'acquisition au cours du balayage, en fonction notamment de la position du faisceau d'excitation dans l'échantillon et/ou par rapport au système optique lui-même.

L'adaptation des paramètres d'acquisition peut porter notamment, de manière non limitative, sur :
- le bilan photonique de la chaîne d'excitation et de détection. Pour cela il est possible d'utiliser par exemple une ou plusieurs méthodes parmi : une modulation de la puissance de la source, une modulation de la cadence des impulsions de lumière, une modulation de la transmission d'un élément optique variable tel qu'un dispositif à cristaux liquides, une modulation de la vitesse de balayage du faisceau, ou du temps d'intégration de la mesure ;
- la mise en forme spatiale du faisceau d'excitation, de telle sorte à corriger les aberrations optiques subies. Cette mise en forme spatiale peut être réalisée en utilisant par exemple un ou plusieurs des dispositifs suivants : miroir déformable, dispositif à micro-miroirs (DMD), matrice à cristaux liquides ou modulateur de lumière spatial (SLM), lentille liquide, lentille à focale variable ;
- la mise en forme spectrale du faisceau d'excitation,
- une mise en forme du faisceau de mesure.

En outre, l'adaptation des paramètres d'acquisition dans un dispositif selon l'invention peut comprendre des opérations en boucle ouverte aussi bien que des opérations en boucle fermée, exploitant par exemple des informations issues de capteurs mesurant un front d'onde du faisceau d'excitation ou une intensité lumineuse émise ou réfléchie.

Les composants existants et utilisables pour adapter les paramètres de l'acquisition (en particulier la mise en forme du faisceau d'excitation) aux conditions locales de mesure présentent souvent l'inconvénient d'avoir des temps de réaction très lents par rapport aux cadences d'acquisition usuelles en microscopie laser à balayage. Par exemple, il est courant d'avoir des cadences d'acquisition de l'ordre de quelques microsecondes par pixel d'image tandis qu'une matrice déformable ou une matrice à cristaux liquides ont un temps de réponse de l'ordre de la milliseconde ou plus. Une mise en oeuvre sans précaution de tels composants peut donc conduire à des temps d'acquisition inacceptables.

Suivant une caractéristique particulièrement avantageuse du procédé selon l'invention, la trajectoire du faisceau d'excitation peut être optimisée de telle sorte à minimiser les performances demandées aux moyens d'adaptation des paramètres de l'acquisition, et ainsi réaliser un optimum entre le temps d'acquisition et les contraintes sur ces moyens d'adaptation. Ce résultat peut être obtenu notamment avec une trajectoire conforme, c'est-à-dire adaptée à la forme de l'échantillon.

Suivant le procédé selon l'invention, le choix des trajectoires et des stratégies d'adaptation de paramètres d'acquisition peuvent être effectuées par exemple :
- sur la base de connaissances à priori sur l'échantillon, dont la nature et la forme globale en biologie notamment sont souvent bien connues ;
- sur la base d'une ou plusieurs séquences de mesures préalables, éventuellement sur un nombre limité de points, pour déterminer par exemple la forme de l'objet, d'autres paramètres tels qu'un coefficient d'absorption, etc. ;
- ou sur la base d'une combinaison de connaissances à priori et de mesures.

Le procédé selon l'invention n'est bien entendu pas limité à l'imagerie des objets sphériques ou cylindriques. En effet, le principe du balayage conforme peut avantageusement s'appliquer à de multiples formes d'échantillons, y compris présentant des angles vifs.
Le procédé selon l'invention permet également avantageusement de corriger des aberrations, notamment à symétrie radiale, du système optique lui-même. En effet, un balayage à symétrie cylindrique, par exemple en cercle ou en spirale, permet de mettre en oeuvre plus aisément un dispositif de mise en forme de front d'onde tel qu'un miroir déformable, ou un modulateur de lumière spatial (SLM) pour corriger ces aberrations.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- la figure 1 présente une vue schématique d'un dispositif selon l'invention,
- la figure 2 présente un exemple de balayage adaptatif optimisé pour un objet sphérique,
- la figure 3 illustre la variation temporelle de la profondeur de mesure dans un objet sphérique pour différents modes de balayage,
- la figure 4 présente des exemples de mesures réelles effectuées sur un échantillon biologique en microscopie non-linéaire.

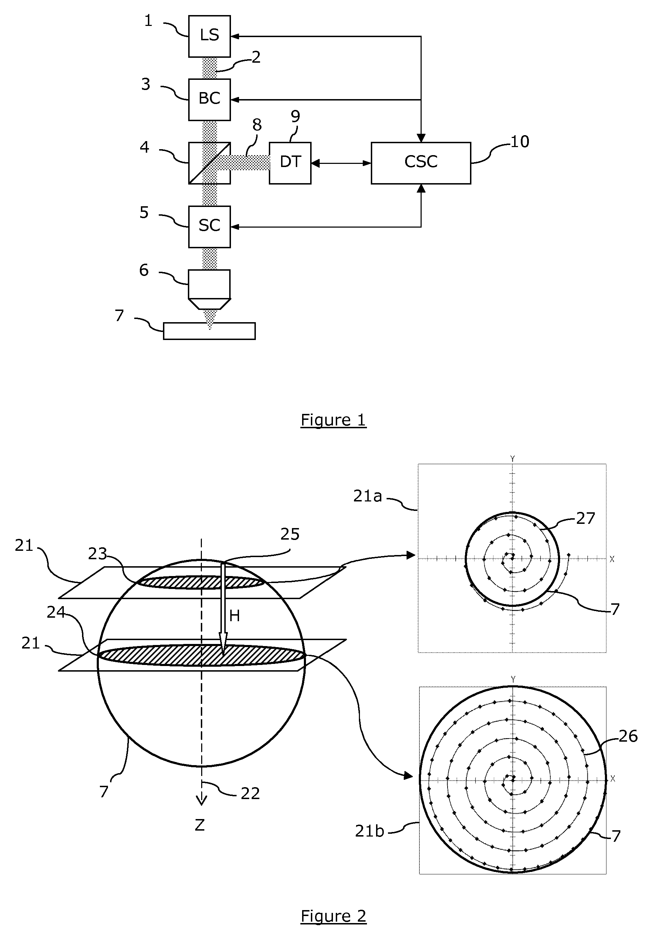

En référence à la figure 1, un dispositif selon l'invention comprend une source de lumière 1 émettant un faisceau d'excitation 2, telle que par exemple un laser pulsé femtoseconde. Cette source de lumière 1 peut être ajustable, notamment en intensité ou temporellement (largeur, durée, cadence et phase spectrale des impulsions, ...).

Le faisceau d'excitation 2 est mis en forme spatialement par des moyens de conditionnement 3, lesquels peuvent comprendre, de manière non limitative :
- des composants optiques tels que des lentilles, fixes ou mobiles, permettant de mettre en forme spatialement le faisceau d'excitation 2 et ajuster sa distance de focalisation ;
- des composants permettant de conditionner le faisceau d'excitation 2, éventuellement en cours de mesure, afin par exemple de mettre en forme son front d'onde, contrôler les aberrations optiques, varier son intensité, contrôler son contenu spectral, voire le moduler temporellement. Ces composants peuvent comprendre notamment des dispositifs à cristaux liquides, des miroirs déformables, des dispositifs à micro-miroirs, des lentilles liquides.

Le dispositif selon l'invention comprend des moyens de balayage 5, qui permettent de balayer au moins latéralement, et éventuellement également en profondeur, l'échantillon avec le faisceau d'excitation 2. Ces moyens de balayage comprennent par exemple des scanners à miroir non résonnants et/ou des éléments acousto-optiques. Ils peuvent être complétés ou remplacés par des moyens de déplacement de l'échantillon 7.

Le dispositif selon l'invention comprend en outre :
- un module de focalisation 6 qui concentre la lumière du faisceau d'excitation dans une zone de l'échantillon à mesurer 7 et collectent la lumière diffusée ou émise 8 ;
- un module de séparation du faisceau de mesure 8 comprenant éventuellement des moyens de séparation spectrale et/ou en polarisation;
- un module de détection 9.

Dans un mode de réalisation particulier, le dispositif peut comprendre des moyens de collecte et de mesure en transmission, au travers de l'échantillon.

Le dispositif selon l'invention comprend en outre une unité de contrôle du balayage 10, appelée aussi « Conformal Scanning Controller » ou CSC. Cette unité de contrôle du balayage 10 peut être réalisée par exemple par un module électronique incluant un microcontrôleur ou un FPGA, par des fonctions logicielles intégrées dans un programme de pilotage sur ordinateur, ou par une combinaison des deux.

Les fonctions de l'unité de contrôle 10 incluent le contrôle du balayage de l'échantillon par le faisceau d'excitation selon au moins une trajectoire déterminée au préalable, en pilotant les moyens de balayage 5 et éventuellement les moyens de conditionnement 3. Cette trajectoire peut être mémorisée dans le CSC par exemple sous la forme d'une séquence de points, ou d'un modèle mathématique.

Les fonctions du CSC 10 peuvent également comprendre un conditionnement du faisceau d'excitation en fonction de la position de mesure, en pilotant au moins l'un parmi les moyens de balayage 5, les moyens de conditionnement 3, la source 1 et les moyens de détection 9. La méthode de conditionnement peut également être mémorisée dans le CSC par exemple sous la forme de séquence de points de fonctionnement, ou de modèles mathématiques.

Le CSC peut en outre exploiter des informations issues des différents modules tels que le module de balayage 5, le module de conditionnement 3, la source 1 et les modules de détection 9 pour le contrôle du balayage et le contrôle du conditionnement du faisceau d'excitation.

Le dispositif tel que présenté à la figure 1 correspond bien entendu à un mode de mise en oeuvre préférentiel mais nullement limitatif du procédé selon l'invention.

Le procédé selon l'invention est implémenté sur un microscope non-linéaire à balayage permettant d'effectuer de l'imagerie à deux photons sur des échantillons biologiques. Les moyens de balayage 5 comprennent deux scanners à miroir non résonnants. Le CSC 10 permet de piloter ces scanners selon des trajectoires préprogrammées et également de moduler la puissance d'excitation de la source 1.

Ce dispositif met en oeuvre une trajectoire conforme, comme illustré à la figure 2 dans le cas d'un objet 7 sphérique représentatif par exemple d'un embryon ou d'un oeuf.

L'acquisition des données est effectuée suivant une succession de plans de coupes **X-Y** 21 correspondant chacun à une distance **Z** 22 le long de l'axe optique du dispositif.

Dans chaque plan **X-Y** de profondeur **Z** donnée, le faisceau d'excitation balaye une trajectoire calculée de telle sorte à se conformer sensiblement aux lignes de niveaux de la surface de l'échantillon, telles qu'elles apparaîtraient dans une projection dans ce plan 21. Ainsi, la variation de profondeur **H** 25 dans l'échantillon entre des points d'acquisition successifs est sensiblement réduite voire minimisée.

Le dispositif d'acquisition selon l'invention peut être programmé pour rechercher une trajectoire qui permette également de réduire sensiblement ou même de minimiser les contraintes dynamiques sur le dispositif de balayage, notamment pour améliorer sa précision. On aboutit ainsi au choix d'une trajectoire en spirale 26 pour l'analyse d'un objet 7 sphérique.

Afin d'optimiser le temps global d'acquisition, il est également possible de limiter la zone d'acquisition à la taille effective de l'échantillon, en exécutant par exemple, dans le cas de la figure 1, une trajectoire telle que 27 dans le plan 21a et une trajectoire telle que 26 dans le plan 21b.

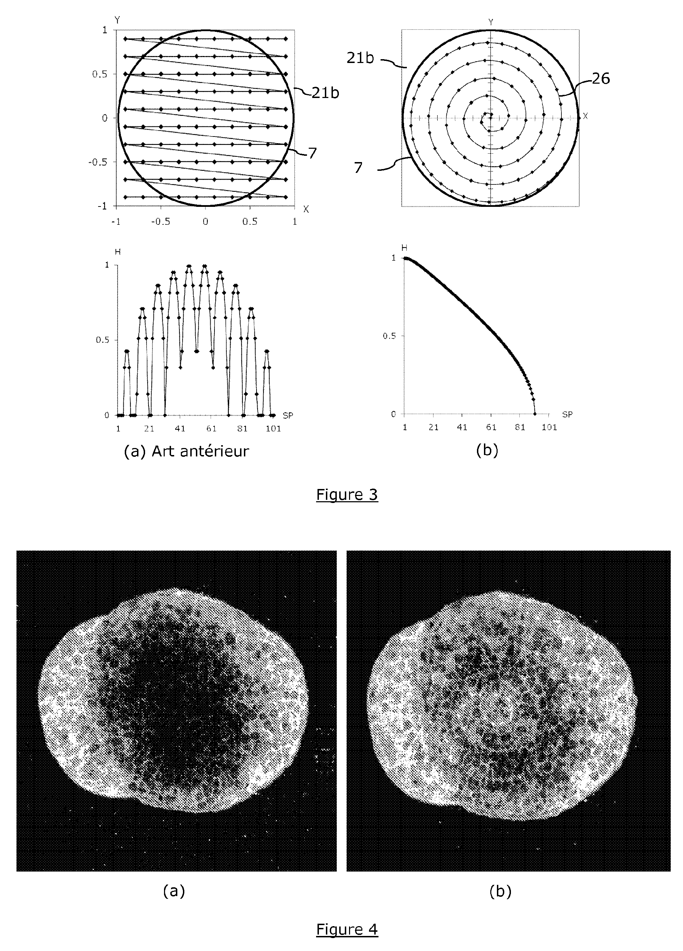

La figure 3 illustre l'avantage d'une trajectoire conforme adaptée à l'échantillon 7 pour la mise en oeuvre de moyens d'adaptation des paramètres de l'acquisition :
- L'échantillon considéré est toujours l'échantillon sphérique 7 de la figure 1,
- Le plan de coupe illustré est le plan 21b,
- la grandeur d'influence prise en compte est la profondeur **H** du point de mesure dans l'objet, qui influe par exemple notablement sur l'absorption subie par le faisceau d'excitation.

La figure 3a montre l'évolution temporelle de la profondeur **H** au cours d'un balayage en forme de grille (« raster scan ») représentatif de l'art antérieur, tandis que la figure 3b illustre l'évolution temporelle de cette même profondeur **H** au cours d'un balayage conforme en spirale 26. On voit que dans le cas du balayage conforme, le paramètre **H** varie beaucoup plus lentement et de manière monotone, ce qui relâche considérablement les exigences en termes de spécifications dynamiques de moyens d'adaptation des paramètres d'acquisition qui suivraient l'évolution de **H**.

La figure 4 illustre des exemples d'acquisition d'images effectuées par un dispositif selon l'invention sur des embryons de poisson, de forme sensiblement sphérique.

La figure 4a montre une coupe optique en profondeur effectuée de manière classique, avec un balayage en forme de trame et sans adaptation des paramètres d'acquisition. Le signal est fortement atténué au centre du champ par rapport à la périphérie, ce qui dégrade considérablement la qualité de l'information recueillie.

La figure 4b montre une coupe optique en profondeur effectuée conformément au procédé selon l'invention, selon un balayage en spirale au cours duquel la vitesse de balayage du faisceau est modulée continûment du centre vers le bord. L'ensemble du champ de vue peut ainsi être imagé correctement, sans augmenter le temps d'acquisition, ni dégrader les régions périphériques du fait d'une augmentation de l'intensité d'excitation. Un tel résultat ne peut pas être obtenu avec un balayage en trame à cause notamment des contraintes dynamiques que cela imposerait au système de balayage.

Le procédé selon l'invention est applicable notamment, de manière non limitative :
- pour le contrôle de la forme spatiale et temporelle du volume focal en microscopie à balayage en général ;
- dans les domaines d'application traditionnels de la microscopie non-linéaire ou confocale, en biologie et médecine (observation de tissus épais), avec notamment l'imagerie tridimensionnelle d'objets non plans tels que des embryons, des tumeurs sphéroïdes ... ;
- plus généralement dans d'autres domaines tels que la caractérisation de matériaux ;

Suivant des modes de réalisation particuliers, le procédé selon l'invention peut également être mis en oeuvre pour la correction d'aberrations et la mise en forme du faisceau lors de l'ablation en profondeur d'objets non plans, dans le contexte de la chirurgie ou du micro-usinage laser.

Bien sûr, l'invention n'est pas limitée aux exemples qui viennent d'être décrits et de nombreux aménagements peuvent être apportés à ces exemples sans sortir du cadre de l'invention.

## Revendications

1. Procédé d'acquisition de signaux en microscopie laser à balayage, comprenant des étapes de :
- déplacement relatif d'un faisceau optique d'excitation (2) focalisé et d'un objet (7) à mesurer, de telle sorte que le point de focalisation dudit faisceau (2) parcoure au moins une trajectoire (26) déterminée au préalable dans le volume dudit objet (7), et
- acquisition de signaux de mesure optique le long de ladite trajectoire (26), selon au moins un paramètre d'acquisition,
**caractérisé en ce que** :
- la trajectoire (26) du faisceau d'excitation est déterminée de telle sorte que, entre lesdites acquisitions de signaux de mesure optique, des variations de propriétés optiques d'au moins une partie des milieux traversés par ledit faisceau d'excitation (2) affectant la propagation dudit faisceau d'excitation sont sensiblement minimisées, et
- au moins un paramètre d'acquisition parmi les paramètres d'acquisition suivants : la puissance d'excitation, la mise en forme spatiale du faisceau d'excitation, la mise en forme spectrale du faisceau d'excitation, la mise en forme temporelle du faisceau d'excitation, la polarisation du faisceau d'excitation, est modulé durant le déplacement dudit faisceau d'excitation (2) de telle sorte à compenser sensiblement lesdites variations de propriétés optiques.

2. Procédé selon la revendication 1, **caractérisé en ce que** la minimisation des variations de propriétés optiques des milieux traversés comprend une minimisation des variations de propriétés spectroscopiques desdits milieux.

3. Procédé selon la revendication 1 ou 2, **caractérisé en ce que**
- Le faisceau d'excitation parcourt au moins une trajectoire (26) située dans un plan moyen (21) sensiblement perpendiculaire à l'axe (22) du système de mesure, et
- ladite trajectoire (26) est déterminée de telle sorte à se conformer sensiblement aux courbes de niveau de la surface de l'objet (7) à mesurer telles que projetées dans ledit plan moyen (21).

4. Procédé selon l'une quelconque des revendications précédentes, **caractérisé en ce que** la trajectoire (26) du faisceau d'excitation est déterminée de telle sorte à se conformer sensiblement aux symétries du système optique de conditionnement dudit faisceau d'excitation.

5. Procédé selon l'une quelconque des revendications précédentes, **caractérisé en ce que** la trajectoire (26) du faisceau d'excitation est déterminée de telle sorte à se conformer sensiblement à la distribution des propriétés optiques et notamment spectroscopiques des milieux traversés à l'origine du signal de mesure.

6. Procédé selon l'une quelconque des revendications précédentes, **caractérisé en ce que** la détermination de la trajectoire (26) du faisceau d'excitation comprend l'utilisation de connaissances à priori sur la forme de l'objet à mesurer (7).

7. Procédé selon l'une quelconque des revendications précédentes, **caractérisé en ce que** la détermination de la trajectoire (26) du faisceau d'excitation comprend l'utilisation de données préliminaires acquises pour déterminer la forme de l'objet à mesurer (7).

8. Procédé selon l'une quelconque des revendications précédentes, **caractérisé en ce que** la détermination de la trajectoire (26) du faisceau d'excitation comprend l'utilisation de données préliminaires acquises pour déterminer la distribution des propriétés optiques et notamment spectroscopiques de l'objet à mesurer (7).

9. Procédé selon l'une quelconque des revendications précédentes, **caractérisé en ce que** la trajectoire (26) du faisceau d'excitation est sensiblement en forme de spirale.

10. Procédé selon l'une quelconque des revendications précédentes, **caractérisé en ce que** les paramètres d'acquisition modulés comprennent en outre au moins un paramètre parmi :
- la vitesse de déplacement du faisceau d'excitation,
- le temps d'acquisition des mesures.

11. Procédé selon la revendication 10, **caractérisé en ce que** au moins un paramètre d'acquisition parmi la puissance d'excitation, la vitesse de déplacement du faisceau d'excitation, la mise en forme temporelle du faisceau d'excitation et le temps d'acquisition des mesures est modulé de telle sorte à compenser sensiblement les pertes optiques dans l'objet à mesurer (7).

12. Procédé selon la revendication 10 ou 11, **caractérisé en ce que** la mise en forme spatiale du faisceau d'excitation (2) est modulée de telle sorte à compenser sensiblement les aberrations subies par ledit faisceau d'excitation.

13. Procédé selon l'une quelconque des revendications 10 à 12, **caractérisé en ce que** au moins un paramètre d'acquisition parmi la mise en forme spatiale, la mise en forme spectrale et la mise en forme temporelle du faisceau d'excitation (2) est modulé de telle sorte à compenser sensiblement les variations locales des propriétés optiques et notamment spectroscopiques des milieux traversés.

14. Dispositif d'acquisition de signaux en microscopie laser à balayage, comprenant :
- des moyens (1) pour produire un faisceau optique d'excitation (2),
- des moyens (6) pour focaliser ledit faisceau (2) à l'intérieur d'un objet (7),
- des moyens (5) pour déplacer ledit faisceau focalisé (2) selon au moins une trajectoire prédéterminée (26), et
- des moyens d'acquisition (9) de signaux de mesure optiques (8) le long de ladite trajectoire, selon au moins un paramètre d'acquisition,
- des moyens (3, 10) pour moduler au moins un paramètre parmi le(s)dit(s) paramètre(s) d'acquisition durant le déplacement dudit faisceau d'excitation,
**caractérisé en ce qu'**il comprend en outre une unité de contrôle (10) permettant de :
- déterminer une trajectoire (26) dudit faisceau d'excitation (2) de telle sorte que, entre lesdites acquisitions de signaux de mesure optique, des variations de propriétés optiques d'au moins une partie des milieux traversés par ledit faisceau d'excitation (2) affectant la propagation dudit faisceau d'excitation sont sensiblement minimisées, et
- moduler au moins un paramètre d'acquisition parmi les paramètres d'acquisition suivants : la puissance d'excitation, la mise en forme spatiale du faisceau d'excitation, la mise en forme spectrale du faisceau d'excitation, la mise en forme temporelle du faisceau d'excitation, la polarisation du faisceau d'excitation, durant le déplacement dudit faisceau d'excitation (2) de telle sorte à compenser sensiblement lesdites variations de propriétés optiques.

15. Dispositif selon la revendication 14, **caractérisé en ce que** les moyens de déplacement du faisceau (2) comprennent des moyens de déflexion (5) du faisceau d'excitation selon au moins une direction.

16. Dispositif selon la revendication 15, **caractérisé en ce que** les moyens de déflexion (5) du faisceau d'excitation (2) comprennent au moins un élément parmi un scanner à miroir et un élément acousto-optique.

17. Dispositif selon l'une quelconque des revendications 14 à 16, caractérisé en qu'il comprend en outre des moyens de déplacement de l'objet à mesurer (7) selon au moins une direction.

18. Dispositif selon l'une quelconque des revendications 14 à 17, **caractérisé en ce qu'**il comprend en outre des moyens de mesure d'au moins un paramètre parmi la position et la vitesse instantanée du faisceau d'excitation (2) relativement à l'objet à mesurer (7);

19. Dispositif selon l'une quelconque des revendications 14 à 18, **caractérisé en ce qu'**il comprend en outre des moyens de mise en forme (3) du faisceau d'excitation (2).

20. Dispositif selon la revendication 19, **caractérisé en ce que** les moyens de mise en forme (3) du faisceau d'excitation (2) comprennent au moins un élément parmi un dispositif à cristaux liquides, un miroir déformable, un modulateur spatial de lumière, un dispositif à micro-miroirs, une lentille liquide, une lentille à focale variable.

## Patentansprüche

1. Verfahren zur Signalerfassung in der Laserscan-Mikroskopie, umfassend Schritte des:
- relativen Verschiebens eines fokussierten optischen Anregungsstrahls (2) und eines zu messenden Objekts (7) derart, dass der Fokuspunkt des Strahls (2) mindestens einen Pfad (26) durchläuft, der vorher in dem Volumen des Objekts (7) bestimmt wird, und
- Erfassens von Signalen zur optischen Messung entlang dem Pfad (26) nach mindestens einem Erfassungsparameter,
**dadurch gekennzeichnet, dass**:
- der Pfad (26) des Anregungsstrahls derart bestimmt wird, dass zwischen den Erfassungen von Signalen zur optischen Messung Variationen von optischen Eigenschaften von mindestens einem Teil der Medien, die von dem Anregungsstrahl (2) durchquert werden, die die Ausbreitung des Anregungsstrahls beeinflussen, im Wesentlichen minimiert werden, und
- mindestens ein Erfassungsparameter unter den folgenden Erfassungsparametern: die Anregungsleistung, die räumliche Formgebung des Anregungsstrahls, die spektrale Formgebung des Anregungsstrahls, die temporale Formgebung des Anregungsstrahls, die Polarisation des Anregungsstrahls während des Verschiebens des Anregungsstrahls (2) derart moduliert wird, um die Variationen von optischen Eigenschaften im Wesentlichen zu kompensieren.

2. Verfahren nach Anspruch 1, **dadurch gekennzeichnet, dass** das Minimieren der Variationen von optischen Eigenschaften der durchquerten Medien ein Minimieren der Variationen von spektroskopischen Eigenschaften der Medien aufweist.

3. Verfahren nach Anspruch 1 oder 2, **dadurch gekennzeichnet, dass**:
- der Anregungsstrahl mindestens einen Pfad (26) durchläuft, der in einer Mittelebene (21) angeordnet ist, die im Wesentlichen senkrecht zur Achse (22) des Messsystems ist, und
- der Pfad (26) derart bestimmt wird, um sich im Wesentlichen an die Kurven der Oberfläche des zu messenden Objekts (7), wie in der Mittelebene (21) projiziert, anzupassen.

4. Verfahren nach einem der vorhergehenden Ansprüche, **dadurch gekennzeichnet, dass** der Pfad (26) des Anregungsstrahls derart bestimmt wird, um sich im Wesentlichen an die Symmetrien des optischen Systems der Formung des Anregungsstrahls anzupassen.

5. Verfahren nach einem der vorhergehenden Ansprüche, **dadurch gekennzeichnet, dass** der Pfad (26) des Anregungsstrahls derart bestimmt wird, um sich im Wesentlichen an die Verteilung der optischen und insbesondere spektroskopischen Eigenschaften der durchquerten Medien am Ursprung des Messsignals anzupassen.

6. Verfahren nach einem der vorhergehenden Ansprüche, **dadurch gekennzeichnet, dass** das Bestimmen des Pfads (26) des Anregungsstrahls die Verwendung von vorherigen Kenntnissen über die Form des zu messenden Objekts (7) umfasst.

7. Verfahren nach einem der vorhergehenden Ansprüche, **dadurch gekennzeichnet, dass** das Bestimmen des Pfads (26) des Anregungsstrahls die Verwendung von vorläufigen Daten, die erworben werden, um die Form des zu messenden Objekts (7) zu bestimmen, umfasst.

8. Verfahren nach einem der vorhergehenden Ansprüche, **dadurch gekennzeichnet, dass** das Bestimmen des Pfads (26) des Anregungsstrahls die Verwendung von vorläufigen Daten, die erworben werden, um die Verteilung der optischen und insbesondere spektroskopischen Eigenschaften des zu messenden Objekts (7) zu bestimmen, umfasst.

9. Verfahren nach einem der vorhergehenden Ansprüche, **dadurch gekennzeichnet, dass** der Pfad (26) des Anregungsstrahls im Wesentlichen spiralförmig ist.

10. Verfahren nach einem der vorhergehenden Ansprüche, **dadurch gekennzeichnet, dass** die modulierten Erfassungsparameter ferner mindestens einen Parameter unter folgenden aufweisen:
- die Verschiebungsgeschwindigkeit des Anregungsstrahls,
- die Erfassungszeit der Messungen.

11. Verfahren nach Anspruch 10, **dadurch gekennzeichnet, dass** mindestens ein Erfassungsparameter unter der Anregungsleistung, der Verschiebungsgeschwindigkeit des Anregungsstrahls, der temporalen Formgebung des Anregungsstrahls und der Erfassungszeit der Messungen derart moduliert wird, um die optischen Verluste in dem zu messenden Objekt (7) im Wesentlichen zu kompensieren.

12. Verfahren nach Anspruch 10 oder 11, **dadurch gekennzeichnet, dass** die räumliche Formgebung des Anregungsstrahls (2) derart moduliert wird, um die Aberrationen, die von dem Anregungsstrahl erlitten werden, im Wesentlichen zu kompensieren.

13. Verfahren nach einem der Ansprüche 10 bis 12, **dadurch gekennzeichnet, dass** mindestens ein Erfassungsparameter unter der räumlichen Formgebung, der spektralen Formgebung und der temporalen Formgebung des Anregungsstrahls (2) derart moduliert wird, um die lokalen Variationen der optischen und insbesondere spektroskopischen Eigenschaften der durchquerten Medien im Wesentlichen zu kompensieren.

14. Vorrichtung zur Signalerfassung in der Laserscan-Mikroskopie, umfassend:
- Mittel (1) zum Erzeugen eines optischen Anregungsstrahls (2),
- Mittel (6) zum Fokussieren des Strahls (2) im Inneren eines Objektes (7),
- Mittel (5) zum Verschieben des fokussierten Strahls (2) entlang mindestens eines vorbestimmten Pfads (26), und
- Mittel zum Erfassen (9) von optischen Messsignalen (8) entlang dem Pfad nach mindestens einem Erfassungsparameter,
- Mittel (3, 10) zum Modulieren von mindestens einem Parameter unter dem (den) Erfassungsparameter(n) während dem Verschieben des Anregungsstrahls,
**dadurch gekennzeichnet, dass** sie ferner eine Steuereinheit (10) aufweist, die Folgendes ermöglicht:
- einen Pfad (26) des Anregungsstrahls (2) derart zu bestimmen, dass zwischen den Erfassungen von Signalen zur optischen Messung Variationen von optischen Eigenschaften von mindestens einem Teil der Medien, die von dem Anregungsstrahl (2) durchquert werden, die die Ausbreitung des Anregungsstrahls beeinflussen, im Wesentlichen minimiert werden, und
- mindestens einen Erfassungsparameter unter den folgenden Erfassungsparametern: die Anregungsleistung, die räumliche Formgebung des Anregungsstrahls, die spektrale Formgebung des Anregungsstrahls, die temporale Formgebung des Anregungsstrahls, die Polarisation des Anregungsstrahls während des Verschiebens des Anregungsstrahls (2) derart zu modulieren, um die Variationen von optischen Eigenschaften im Wesentlichen zu kompensieren.

15. Vorrichtung nach Anspruch 14, **dadurch gekennzeichnet, dass** die Mittel zum Verschieben des Strahls (2) Mittel zum Ablenken (5) des Anregungsstrahls in mindestens einer Richtung aufweisen.

16. Vorrichtung nach Anspruch 15, **dadurch gekennzeichnet, dass** die Mittel zum Ablenken (5) des Anregungsstrahls (2) mindestens ein Element aus einem Spiegelscanner und einem akustooptischen Element aufweisen.

17. Vorrichtung nach einem der Ansprüche 14 bis 16, **dadurch gekennzeichnet, dass** sie ferner Mittel zum Verschieben des zu messenden Objekts (7) in mindestens einer Richtung aufweist.

18. Vorrichtung nach einem der Ansprüche 14 bis 17, **dadurch gekennzeichnet, dass** sie ferner Mittel zum Messen von mindestens einem Parameter aus der Position und der Momentangeschwindigkeit des Anregungsstrahls (2) in Bezug auf das zu messende Objekt (7) aufweist.

19. Vorrichtung nach einem der Ansprüche 14 bis 18, **dadurch gekennzeichnet, dass** sie ferner Mittel zum Formgeben (3) des Anregungsstrahls (2) aufweist.

20. Vorrichtung nach Anspruch 19, **dadurch gekennzeichnet, dass** die Mittel zum Formgeben (3) des Anregungsstrahls (2) mindestens ein Element aus einer Flüssigkristallvorrichtung, einem deformierbaren Spiegel, einem räumlichen Lichtmodulator, einer digitalen Mikrospiegelvorrichtung, einer Flüssiglinse, einer Linse mit veränderlicher Brennweite aufweisen.

## Claims

1. Method for acquiring signals in laser scanning microscopy, comprising steps of:
- relative displacement of a focused optical excitation beam (2) and of an object (7) to be measured, such that the point of focus of said beam (2) travels at least one previously determined trajectory (26) in the volume of said object (7), and
- acquisition of optical measurement signals along said trajectory (26), according to at least one acquisition parameter,
**characterized in that**:
- the trajectory (26) of the excitation beam is determined such that, between said acquisitions of optical measurement signals, variations of optical properties of at least some of the media passed through by said excitation beam (2) affecting the propagation of said excitation beam are substantially minimized, and
- at least one acquisition parameter among the following acquisition parameters: excitation power, spatial forming of the excitation beam, spectral forming of the excitation beam, temporal forming of the excitation beam, polarization of the excitation beam, is modulated during the displacement of said excitation beam (2) so as to substantially compensate said variations of optical properties.

2. Method according to Claim 1, **characterized in that** the minimization of the variations of optical properties of the media passed through comprises a minimization of the variations of spectroscopic properties of said media.

3. Method according to Claim 1 or 2, **characterized in that**
- the excitation beam travels at least one trajectory (26) situated in a mid-plane (21) substantially at right angles to the axis (22) of the measurement system, and
- said trajectory (26) is determined so as to conform substantially to the level curves of the surface of the object (7) to be measured as projected in said mid-plane (21).

4. Method according to any one of the preceding claims, **characterized in that** the trajectory (26) of the excitation beam is determined so as to conform substantially to the symmetries of the optical system conditioning said excitation beam.

5. Method according to any one of the preceding claims, **characterized in that** the trajectory (26) of the excitation beam is determined so as to conform substantially to the distribution of the optical properties and notably spectroscopic properties of the media passed through at the origin of the measurement signal.

6. Method according to any ane of the preceding claims, **characterized in that** the determination of the trajectory (26) of the excitation beam comprises the use of a priori knowledge on the form of the object to be measured (7).

7. Method according to any one of the preceding claims, **characterized in that** the determination of the trajectory (26) of the excitation beam comprises the use of preliminary data acquired to determine the form of the object to be measured (7).

8. Method according to any one of the preceding claims, **characterized in that** the determination of the trajectory (26) of the excitation beam comprises the use of preliminary data acquired to determine the distribution of the optical properties and notably spectroscopic properties of the object to be measured (7) .

9. Method according to any one of the preceding claims, **characterized in that** the trajectory (26) of the excitation beam is substantially of spiral form.

10. Method according to any one of the preceding claims, **characterized in that** the modulated acquisition parameters further comprise at least one parameter among:
- the rate of displacement of the excitation beam,
- the acquisition time of the measurements.

11. Method according to Claim 10, **characterized in that** at least one acquisition parameter among the excitation power, the rate of displacement of the excitation beam, the temporal forming of the excitation beam and the acquisition time of the measurements is modulated so as to substantially compensate the optical losses in the object to be measured (7).

12. Method according to Claim 10 or 11, **characterized in that** the spatial forming of the excitation beam (2) is modulated so as to substantially compensate the aberrations undergone by said excitation beam.

13. Method according to any one of Claims 10 to 12, **characterized in that** at least one acquisition parameter among the spatial forming, the spectral forming and the temporal forming of the excitation beam (2) is modulated so as to substantially compensate the local variations of the optical properties and notably spectroscopic properties of the media passed through.

14. Device for acquiring signals in laser scanning microscopy, comprising:
- means (1) for producing an optical excitation beam (2),
- means (6) for focusing said beam (2) inside an object (7),
- means (5) for displacing said focused beam (2) along at least one predetermined trajectory (26), and
- means (9) for acquiring optical measurement signals (8) along said trajectory, according to at least one acquisition parameter,
- means (3, 10) for modulating at least one parameter among said acquisition parameter(s) during the displacement of said excitation beam, **characterized in that** it further comprises a control unit (10) making it possible to:
- determine a trajectory (26) of said excitation beam (2) such that, between said acquisitions of optical measurement signals, variations of optical properties of at least some of the media passed through by said excitation beam (2) affecting the propagation of said excitation beam are substantially minimized, and
- modulate at least one acquisition parameter among the following acquisition parameters: excitation power, spatial forming of the excitation beam, spectral forming of the excitation beam, temporal forming of the excitation beam, polarization of the excitation beam, during the displacement of said excitation beam (2) so as to substantially compensate said variations of optical properties.

15. Device according to Claim 14, **characterized in that** the means for displacing the beam (2) comprise means (5) for deflecting the excitation beam in at least one direction.

16. Device according to Claim 15, **characterized in that** the means (5) for deflecting the excitation beam (2) comprise at least one element among a mirror scanner and an acousto-optical element.

17. Device according to any one of Claims 14 to 16, **characterized in that** it further comprises means for displacing the object to be measured (7) in at least one direction.

18. Device according to any one of Claims 14 to 17, **characterized in that** it further comprises means for measuring at least one parameter among the position and instantaneous speed of the excitation beam (2) relative to the object to be measured (7).

19. Device according to any one of Claims 14 to 18, **characterized in that** it further comprises means (3) for forming the excitation beam (2).

20. Device according to Claim 19, **characterized in that** the means (3) for forming the excitation beam (2) comprise at least one element among a liquid crystal device, a deformable mirror, a spatial light modulator, a micro mirror device, a liquid lens, a lens with variable focal length.
